# EUROPEAN PATENT SPECIFICATION

(11) **EP 4 052 950 B1**
(45) Date of publication and mention of the grant of the patent: **26.02.2025**
(21) Application number: 20882183.5
(22) Date of filing: 09.09.2020
(51) Int. Cl.: B60L 13/06, B61F 9/00, B60L 13/08, B61B 13/08

(54) **MAGLEV TRAIN GUIDING METHOD AND GUIDE WHEEL DEVICE**
VERFAHREN ZUM LEITEN VON MAGNETSCHWEBEZÜGEN UND LEITRADVORRICHTUNG
PROCÉDÉ DE GUIDAGE DE TRAIN À SUSTENTATION MAGNÉTIQUE ET DISPOSITIF DE ROUE DE GUIDAGE

(30) Priority: 29.10.2019 CN 201911035850
(43) Date of publication of application: 07.09.2022
(73) Proprietor: Zhuzhou Times New Material Technology Co., Ltd, Zhuzhou, Hunan 412007 (CN)
(72) Inventor: LIU, Wensong, Zhuzhou, Hunan 412007 (CN); YAN, Yao, Zhuzhou, Hunan 412007 (CN); XIAO, Xianglong, Zhuzhou, Hunan 412007 (CN); HU, Weihui, Zhuzhou, Hunan 412007 (CN); LIN, Sheng, Zhuzhou, Hunan 412007 (CN)
(74) Representative: Zhu, Junyi
(86) International application number: PCT/CN2020/114155
(87) International publication number: WO 2021/082750

(56) References cited:
- WO-A1-2012/061995
- CN-A- 1 958 365
- CN-A- 104 670 041
- CN-A- 108 394 310
- CN-A- 108 757 894
- CN-A- 108 757 894
- CN-A- 110 722 993
- CN-U- 208 576 998
- JP-A- H05 208 730
- US-A- 4 217 829
- US-A- 4 913 059
- US-A- 5 477 788
- US-A1- 2007 095 245

## Description

### Technical Field

The present invention relates to the technical field of maglev guidance, in particular to a maglev train guide method and guide wheel device.

### Background

At present, in the operation process of maglev trains and some monorail trains, a bogie will float up and down due to the change of forces and the use requirements, so that a guide wheel will float up and down with the bogie.

A guide wheel device with a traditional structure only allows the guide wheel to roll in a single plane. If the guide wheel need to be moved on a vertical plane, sliding friction will be caused to the outer ring of the guide wheel, which will result in local wear on the outer ring of the guide wheel in the long run.

US2007/095245A1 discloses a magnetic levitation guideway-train system, wherein the levitation power chambers located at a lower portion of the train are fitted in the grooved guideway, and the side permanent magnets of the levitation power chambers and the ferromagnetic balance levitation tracks correspond to one another so as to generate upward or downward balance attractive force for the train. Wing permanent magnets at the bottom of the levitation power chamber and the permanent magnet tracks correspond to one another so that the identical poles of the wing permanent magnets and the permanent magnet tracks repel one another to provide the train with an upward repulsion levitation force.

US4217829A discloses a system and vehicle to be held magnetically. A vehicle has a compartment joined to a carrier by springs. An attracting magnetic device has a first part (e.g. a ferromagnetic travelling field stator) mounted on a roadway, and a second part (e.g. spaced permanent magnets forming a synchronous linear motor in combination with the stator) mounted on the carrier. The two parts of the magnet device lie opposite one another to leave an air gap therebetween and so to hold the vehicle in spaced relation to the roadway. An additional-force device is mounted to act between the vehicle and the roadway and supplements the force of the magnetic attraction to make up the holding force needed to maintain the vehicle in the desired position relative to the roadway. The part of the magnetic device that is mounted on the vehicle can be displaced relative to the additional-force device to vary the width of the air gap and thereby vary the force of the magnetic attraction. Such displacement can be caused by a device responsive to variations in distance between the vehicle compartment and the carrier on compression or expansion of the springs.

CN104670041A discloses a running mechanism comprising a mechanism body, wherein a plurality of groups of running wheels arranged on a skid supporting surface of an F-rail in a pressing manner and a plurality of groups of guiding wheels arranged on the outer side of the F-rail in the pressing manner are arranged on the mechanism body. Each group of running wheels comprise at least two running wheels arranged next to each other front and back. The running wheels are arranged on the mechanism body for running on the F-rail. The guiding wheels are used for generating an acting force with the outer side of the F-rail when steering, so as to steer conveniently. As each group of running wheels comprise at least two running wheels arranged next to each other, when passing a rail gap, only one of the plurality of running wheels is located at the non-supported state, and the rest running wheels are still supported on the rail. By utilizing the structure, the running stability of the railcar on the F-rail is improved. The application further provides a magnetic suspension railcar provided with the running mechanism, and the technical points refer to the foregoing.

### Summary

The technical problem to be solved by the present invention is to provide a maglev train guide method and guide wheel device, which can meet the requirement that a guide wheel moves perpendicular to the rotation direction of wheels, and the guide wheel can either rotate on a horizontal plane or move up and down perpendicular to the horizontal plane; and positional structure of the guide wheel is adjusted by adjusting design of springs, thus to make the guide wheel move up and down in an extremely small or extremely large range.

To solve the existing technical problem, the present invention adopts the following technical solution:
A maglev train guide method, comprising:
Arranging a guide wheel device with springs and a linear bearing, wherein the guide wheel device comprises a base, a slewing bearing, a wheel shaft and a guide wheel. The linear bearing is arranged in the guide wheel and sheathed on the wheel shaft, the wheel shaft and the base are connected by the slewing bearing, the springs are sheathed on the wheel shaft on both sides of the guide wheel and include a lower spring and an upper spring, both sides of the guide wheel are respectively connected to one side of the upper spring and one side of the lower spring, and the base is fixedly arranged on a car body. The specific guide method is as follows:
A friction force F(friction) exists between the guide wheel and a track, the guide wheel itself has a gravity G, and the springs have elastic forces F(elastic); the value of F(friction) will fluctuate up and down due to track manufacturing errors and car body shaking in the operation process; as the guide wheel device will move up or down, the direction of F(friction) will be downward or upward.

In an initial state, G=F(elastic), and the guide wheel remains in the middle of the wheel shaft.

When the guide wheel device ascends or descends, the elastic forces F(elastic) become greater, but F(elastic)<G+F(friction), so the guide wheel will move on the wheel shaft.

When the car body shakes in the operation process and results in F(friction) reduction, if F(elastic)>G+F(friction), the guide wheel will move to the initial state.

When the guide wheel leaves the track, F(friction) is 0, and F(elastic)>G+F(friction), so the guide wheel will move to the initial state.

Another purpose of the present invention is to provide a guide wheel device for the guide method, comprising a base, a slewing bearing, a wheel shaft, springs, a linear bearing and a guide wheel. The linear bearing is arranged in the guide wheel and sheathed on the wheel shaft, the wheel shaft and the base are connected by the slewing bearing, the springs are sheathed on the wheel shaft on both sides of the guide wheel and include a lower spring and an upper spring, both sides of the guide wheel are respectively connected to one side of the upper spring and one side of the lower spring, and the base is fixedly arranged on a car body.

Further, the lower spring is naturally in a compressed state, and the elastic force F(elastic) of the lower spring is equal to the gravity G of the guide wheel.

Further, in order to have a better guide effect, the guide wheel always keeps in contact with the track during operation.

Further, the linear bearing is a slewing linear bearing.

Further, when the guide wheel device is in the initial state, the guide wheel is located in the middle of the wheel shaft.

Further, the length of the upper spring is smaller than that of the lower spring.

According to the above guide method, the operating mode of the guide wheel device is as follows:
When the guide wheel device ascends with the car body, as the sum of the friction force between the guide wheel and the track and the gravity of the guide wheel is greater than the elastic forces of the springs, the guide wheel moves downward gradually with the linear bearing to compress the lower spring, which ensures that the contact position between the guide wheel and the track remains unchanged in the vertical direction; when the pressure between the track and the guide wheel is reduced or eliminated, the guide wheel is pushed by the elastic force of the lower spring to move upward in the vertical direction on the track; in the upward movement process, the guide wheel gradually comes into contact with the track again and generates a friction force; and the cycle is repeated.

When the guide wheel device descends with the car body, as the friction force between the guide wheel and the track is greater than the elastic forces of the springs, the guide wheel moves upward gradually with the linear bearing to compress the upper spring, which ensures that the contact position between the guide wheel and the track remains unchanged in the vertical direction; when the pressure between the track and the guide wheel is reduced or eliminated, the guide wheel is pushed by the elastic force of the upper spring to move downward in the vertical direction on the track; in the downward movement process, the guide wheel gradually comes into contact with the track again and generates a friction force; and the cycle is repeated.

### The present invention has the following beneficial effects:

The present invention can meet the requirement that a guide wheel moves perpendicular to the rotation direction of wheels, and the guide wheel can either rotate on a horizontal plane or move up and down perpendicular to the horizontal plane; and positional structure of the guide wheel is adjusted by adjusting design of springs, thus to make the guide wheel move up and down in an extremely small or extremely large range.

### Description of Drawings

Fig. 1 is a structural schematic diagram of a guide wheel device in an embodiment;
Fig. 2 is a schematic diagram of stress on a guide wheel in an embodiment; and
Fig. 3 is a schematic diagram of stress-bearing movement of a guide wheel in an embodiment when ascending with a car body.

### Detailed Description

The present invention will be further described below in combination with specific embodiments. Wherein the drawings are only used for exemplary description, are only schematic diagrams rather than physical diagrams, and shall not be understood as a limitation to the present patent. In order to better illustrate the embodiments of the present invention, some components in the drawings may be omitted, scaled up or scaled down, and do not reflect actual product sizes. It should be understandable for those skilled in the art that some well-known structures and description thereof in the drawings may be omitted.

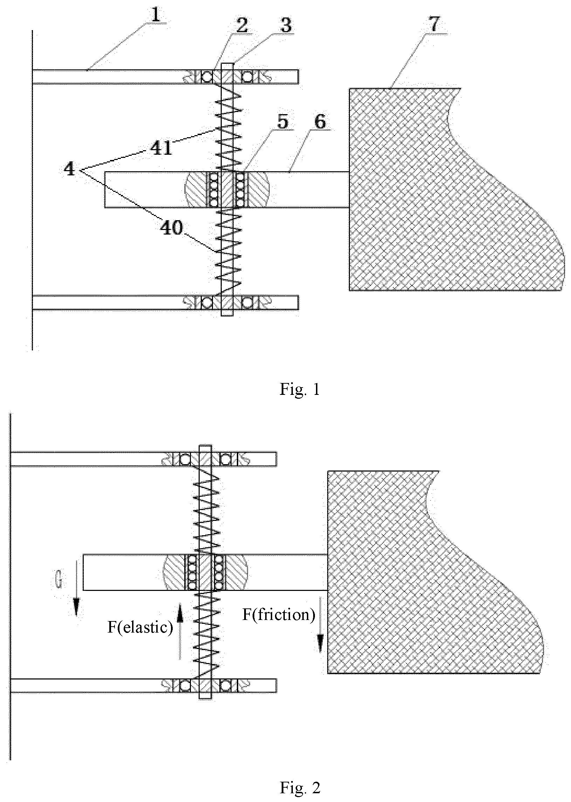

As shown in Fig. 1, the embodiment provides a guide wheel device, comprising a base 1, a slewing bearing 2, a wheel shaft 3, springs 4, a linear bearing 5 and a guide wheel 6. The linear bearing 5 is arranged in the guide wheel 6 and sheathed on the wheel shaft 3, the wheel shaft 3 and the base 1 are connected by the slewing bearing 2, the springs 4 are sheathed on the wheel shaft 3 on both sides of the guide wheel 6 and include a lower spring 40 and an upper spring 41, both sides of the guide wheel 6 are respectively connected to one side of the upper spring 41 and one side of the lower spring 40, and the base 1 is fixedly arranged on a car body.

The lower spring 40 is naturally in a compressed state, and the elastic force F(elastic) of the lower spring 40 is equal to the gravity G of the guide wheel 6.

The guide wheel 6 always keeps in contact with a track 7 during operation.

In the embodiment, the linear bearing 5 is a slewing linear bearing.

When the guide wheel device is in the initial state, the guide wheel 6 is located in the middle of the wheel shaft 3.

In the embodiment, the length of the upper spring 41 is smaller than that of the lower spring 40.

As shown in Figs 1 and 2, the guide method of the present invention is as follows:
A friction force F(friction) exists between the guide wheel 6 and the track 7, the guide wheel 6 itself has a gravity G, and the springs 4 have elastic forces F(elastic); the value of F(friction) will fluctuate up and down due to track manufacturing errors and car body shaking in the operation process; as the guide wheel device will move up or down, the direction of F(friction) will be downward or upward.

In the initial state, G=F(elastic), and the guide wheel 6 remains in the middle of the wheel shaft.

When the guide wheel device ascends or descends, the elastic forces F(elastic) become greater, but F(elastic)<G+F(friction), so the guide wheel 6 will move on the wheel shaft.

When the car body shakes in the operation process and results in F(friction) reduction, if F(elastic)>G+F(friction), the guide wheel 6 will move to the initial state.

When the guide wheel 6 leaves the track, F(friction) is 0, and F(elastic)>G+F(friction), so the guide wheel 6 will move to the initial state.

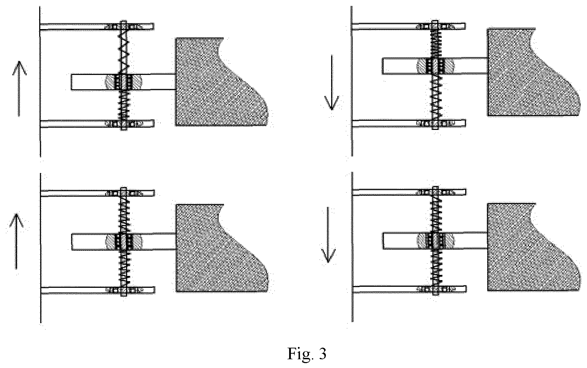

As shown in Figs 1 and 3, the operating mode of the present invention is as follows:
When the guide wheel device ascends with the car body, as the sum of the friction force between the guide wheel 6 and the track 7 and the gravity of the guide wheel 6 is greater than the elastic forces of the springs 4, the guide wheel 6 moves downward gradually with the linear bearing 5 to compress the lower spring 40, which ensures that the contact position between the guide wheel 6 and the track 7 remains unchanged in the vertical direction; when the pressure between the track 7 and the guide wheel 6 is reduced or eliminated, the guide wheel 6 is pushed by the elastic force of the lower spring 40 to move upward in the vertical direction on the track 7; in the upward movement process, the guide wheel 6 gradually comes into contact with the track 7 again and generates a friction force; and the cycle is repeated.

When the guide wheel device descends with the car body, as the friction force between the guide wheel 6 and the track 7 is greater than the elastic forces of the springs 4, the guide wheel 6 moves upward gradually with the linear bearing 5 to compress the upper spring 41, which ensures that the contact position between the guide wheel 6 and the track 7 remains unchanged in the vertical direction; when the pressure between the track 7 and the guide wheel 6 is reduced or eliminated, the guide wheel 6 is pushed by the elastic force of the upper spring 41 to move downward in the vertical direction on the track 7; in the downward movement process, the guide wheel 6 gradually comes into contact with the track 7 again and generates a friction force; and the cycle is repeated.

The embodiment can meet the requirement that a guide wheel moves perpendicular to the rotation direction of wheels, and the guide wheel can either rotate on a horizontal plane or move up and down perpendicular to the horizontal plane;
Apparently, the above embodiment is only an example made for clearly describing the present invention.

For those ordinary skilled in the art, other variations or changes in other forms can also be made based on the above description.

## Claims

1. A maglev train guide method, comprising:
arranging a guide wheel device with springs (4) and a linear bearing (5), wherein the guide wheel device comprises a base (1), a slewing bearing (2), a wheel shaft (3) and a guide wheel (6), wherein the linear bearing (5) is arranged in the guide wheel (6) and sheathed on the wheel shaft (3), the wheel shaft (3) and the base (1) are connected by the slewing bearing, the springs (4) are sheathed on the wheel shaft (3) on both sides of the guide wheel (6) and include a lower spring (40) and an upper spring (41), both sides of the guide wheel (6) are respectively connected to one side of the upper spring (41) and one side of the lower spring (40), and the base (1) is fixedly arranged on a car body, wherein the lower spring is naturally in a compressed state, and the elastic force F(elastic) of the lower spring is equal to the gravity G of the guide wheel, and the linear bearing is a slewing linear bearing, wherein
a friction force F(friction) exists between the guide wheel (6) and a track (7), the guide wheel (6) itself has a gravity G, and the springs (4) have elastic forces F(elastic); the value of F(friction) will fluctuate up and down due to track (7) manufacturing errors and car body shaking in the operation process; as the guide wheel device will move up or down, the direction of F(friction) will be downward or upward;
in an initial state, G=F(elastic), and the guide wheel (6) remains in the middle of the wheel shaft (3);
when the guide wheel device ascends with the car body, sum of the friction force between the guide wheel (6) and the track (7) and the gravity of the guide wheel (6) is greater than the elastic forces of the springs (4), the guide wheel (6) moves downward gradually with the linear bearing (5) to compress the lower spring (40), the contact position between the guide wheel (6) and the track (7) remains unchanged in the vertical direction; when the pressure between the track (7) and the guide wheel (6) is reduced or eliminated, the guide wheel (6) is pushed by the elastic force of the lower spring (40) to move upward in the vertical direction on the track (7); in the upward movement process, the guide wheel (6) gradually comes into contact with the track (7) again and generates a friction force; and the cycle is repeated;
when the guide wheel device descends with the car body, the friction force between the guide wheel (6) and the track (7) is greater than the elastic forces of the springs (4), the guide wheel (6) moves upward gradually with the linear bearing (5) to compress the upper spring (41), the contact position between the guide wheel (6) and the track (7) remains unchanged in the vertical direction; when the pressure between the track (7) and the guide wheel (6) is reduced or eliminated, the guide wheel (69 is pushed by the elastic force of the upper spring (41) to move downward in the vertical direction on the track (7); in the downward movement process, the guide wheel (6) gradually comes into contact with the track (7) again and generates a friction force; and the cycle is repeated;
when the car body shakes in the operation process and results in F(friction) reduction, if F(elastic)>G+F(friction), the guide wheel will move to the initial state;
when the guide wheel (6) leaves the track (7), F(friction) is 0, and F(elastic)>G+F(friction), so the guide wheel (6) will move to the initial state.

2. A guide wheel device comprising a base (1), a slewing bearing (2), a wheel shaft (3), springs (4), a linear bearing (5) and a guide wheel (6), wherein the linear bearing (5) is arranged in the guide wheel (6) and sheathed on the wheel shaft (3), the wheel shaft (3) and the base (1) are connected by the slewing bearing (2), the springs (4) are sheathed on the wheel shaft (3) on both sides of the guide wheel (6) and include a lower spring (40) and an upper spring (41), both sides of the guide wheel (6) are respectively connected to one side of the upper spring (41) and one side of the lower spring (40), and the base (1) is fixedly arranged on a car body, **characterized in that** the lower spring (40) is naturally in a compressed state, and the elastic force F(elastic) of the lower spring (40) is equal to the gravity G of the guide wheel (6), and the linear bearing (5) is a slewing linear bearing; and **in that** the guide wheel device is configured to carry out the method of claim 1.

3. The guide wheel device according to claim 2, wherein the length of the upper spring (41) is smaller than that of the lower spring (40).

4. The guide wheel device according to claim 2, wherein the guide wheel (6) is configured such that: the guide wheel (6) can either rotate on a horizontal plane or move up and down perpendicular to the horizontal plane.

## Patentansprüche

1. Verfahren zur Führung einer Magnetschwebebahn, umfassend:
Anordnen einer Führungsradvorrichtung mit Federn (4) und einem Linearlager (5), wobei die Führungsradvorrichtung eine Basis (1), ein Drehlager (2), eine Radwelle (3) und ein Führungsrad (6) aufweist, wobei das Linearlager (5) in dem Führungsrad (6) angeordnet und auf der Radwelle (3) ummantelt ist, die Radwelle (3) und die Basis (1) durch das Drehlager verbunden sind, die Federn (4) auf der Radwelle (3) auf beiden Seiten des Führungsrads (6) ummantelt sind und eine untere Feder (40) und eine obere Feder (41) umfassen, beide Seiten des Führungsrads (6) jeweils mit einer Seite der oberen Feder (41) und einer Seite der unteren Feder (40) verbunden sind, und die Basis (1) fest an einem Fahrzeugwagen angeordnet ist, wobei sich die untere Feder von Natur aus in einem zusammengedrückten Zustand befindet und die elastische Kraft F(elastisch) der unteren Feder gleich der Schwerkraft G des Führungsrades ist, und das Linearlager ein schwenkbares Linearlager ist, wobei
eine Reibungskraft F(Reibung) zwischen dem Führungsrad (6) und einer Schiene (7) besteht, das Führungsrad (6) selbst eine Schwerkraft G hat und die Federn (4) elastische Kräfte F(elastisch) haben; der Wert von F(Reibung) aufgrund von Herstellungsfehlern der Schiene (7) und Erschütterungen der Fahrzeugkarosserie während des Betriebsprozesses nach oben und unten schwanken wird; wenn sich die Führungsradvorrichtung nach oben oder unten bewegt, wird die Richtung von F(Reibung) nach unten oder oben sein;
in einem Ausgangszustand G=F(elastisch) ist und das Führungsrad (6) in der Mitte der Radwelle (3) bleibt;
wenn die Führungsradvorrichtung mit dem Fahrzeugwagen aufsteigt, die Summe der Reibungskraft zwischen dem Führungsrad (6) und der Schiene (7) und der Schwerkraft des Führungsrades (6) größer ist als die elastischen Kräfte der Federn (4), das Führungsrad (6) sich mit dem linearen Lager (5) allmählich nach unten bewegt, um die untere Feder (40) zusammenzudrücken, so dass die Kontaktposition zwischen dem Führungsrad (6) und der Schiene (7) in vertikaler Richtung unverändert bleibt; wenn der Druck zwischen der Schiene (7) und dem Führungsrad (6) verringert oder aufgehoben wird, das Führungsrad (6) durch die elastische Kraft der unteren Feder (40) gedrückt wird, um sich in vertikaler Richtung auf der Schiene (7) nach oben zu bewegen; bei der Aufwärtsbewegung das Führungsrad (6) allmählich wieder mit der Schiene (7) in Kontakt kommt und eine Reibungskraft erzeugt; und der Zyklus sich wiederholt;
wenn sich die Führungsradvorrichtung mit dem Fahrzeugwagen abwärts bewegt, die Reibungskraft zwischen dem Führungsrad (6) und der Schiene (7) größer ist als die elastischen Kräfte der Federn (4), das Führungsrad (6) sich mit dem linearen Lager (5) allmählich nach oben bewegt, um die obere Feder (41) zusammenzudrücken, die Kontaktposition zwischen dem Führungsrad (6) und der Schiene (7) in vertikaler Richtung unverändert bleibt; wenn der Druck zwischen der Schiene (7) und dem Führungsrad (6) verringert oder aufgehoben wird, das Führungsrad (6) durch die elastische Kraft der oberen Feder (41) gedrückt wird, um sich in der vertikalen Richtung auf der Schiene (7) nach unten zu bewegen; bei der Abwärtsbewegung das Führungsrad (6) allmählich wieder in Kontakt mit der Schiene (7) kommt und eine Reibungskraft erzeugt; und der Zyklus wiederholt wird;
wenn der Fahrzeugwagen während des Betriebs schüttelt und zu einer Verringerung von F(Reibung) führt, wenn F(elastisch)>G+F(Reibung), sich das Führungsrad in den Ausgangszustand bewegt;
wenn das Führungsrad (6) die Schiene (7) verlässt, F(Reibung) 0 ist und F(elastisch)>G+F(Reibung), so dass sich das Führungsrad (6) in den Ausgangszustand bewegt.

2. Führungsradvorrichtung umfassend eine Basis (1), ein Drehlager (2), eine Radwelle (3), Federn (4), ein Linearlager (5) und ein Führungsrad (6), wobei das Linearlager (5) in dem Führungsrad (6) angeordnet und auf der Radwelle (3) ummantelt ist, die Radwelle (3) und die Basis (1) durch das Drehlager (2) verbunden sind, die Federn (4) auf der Radwelle (3) auf beiden Seiten des Führungsrades (6) ummantelt sind und eine untere Feder (40) und eine obere Feder (41) umfassen, beide Seiten des Führungsrades (6) jeweils mit einer Seite der oberen Feder (41) und einer Seite der unteren Feder (40) verbunden sind, und die Basis (1) fest an einem Fahrzeugwagen angeordnet ist, **dadurch gekennzeichnet, dass** die untere Feder (40) von Natur aus in einem komprimierten Zustand ist, und die elastische Kraft F(elastisch) der unteren Feder (40) gleich der Schwerkraft G des Führungsrades (6) ist, und das Linearlager (5) ein schwenkbares Linearlager ist; und dass die Führungsradvorrichtung zur Durchführung des Verfahrens nach Anspruch 1 ausgebildet ist.

3. Führungsradvorrichtung nach Anspruch 2, wobei die Länge der oberen Feder (41) kleiner ist als die der unteren Feder (40).

4. Führungsradvorrichtung nach Anspruch 2, wobei das Führungsrad (6) so konfiguriert ist, dass: das Führungsrad (6) entweder auf einer horizontalen Ebene rotieren oder sich senkrecht zur horizontalen Ebene auf und ab bewegen kann.

## Revendications

1. Procédé de guidage d'un train à sustentation magnétique, comprenant disposer un dispositif de roue de guidage avec des ressorts (4) et un palier linéaire (5), dans lequel le dispositif de roue de guidage comprend une base (1), un palier d'orientation (2), un arbre de roue (3) et une roue de guidage (6), dans lequel le palier linéaire (5) est disposé dans la roue de guidage (6) et gainé sur l'arbre de roue (3), l'arbre de roue (3) et la base (1) sont reliés par le palier d'orientation, les ressorts (4) sont gainés sur l'arbre de roue (3) des deux côtés de la roue de guidage (6) et comprennent un ressort inférieur (40) et un ressort supérieur (41), les deux côtés de la roue de guidage (6) sont respectivement reliés à un côté du ressort supérieur (41) et à un côté du ressort inférieur (40), et la base (1) est disposée de manière fixe sur une carrosserie de voiture, dans laquelle le ressort inférieur est naturellement dans un état comprimé, et la force élastique F(élastique) du ressort inférieur est égale à la gravité G de la roue de guidage, et le palier linéaire est un palier linéaire d'orientation, dans lequel
une force de frottement F(frottement) existe entre la roue de guidage (6) et une voie (7), la roue de guidage (6) elle-même a une gravité G, et les ressorts (4) ont des forces élastiques F(élastique) ; la valeur de F(frottement) fluctue vers le haut et vers le bas en raison des erreurs de fabrication de la voie (7) et des secousses de la carrosserie de la voiture au cours du processus de fonctionnement ; lorsque le dispositif de la roue de guidage se déplace vers le haut ou vers le bas, la direction de F(frottement) est vers le bas ou vers le haut ;
dans un état initial, G=F(élastique), et la roue de guidage (6) reste au milieu de l'arbre de roue (3) ;
Lorsque le dispositif de la roue de guidage monte avec le corps de la voiture, la somme de la force de frottement entre la roue de guidage (6) et la voie (7) et la gravité de la roue de guidage (6) est supérieure aux forces élastiques des ressorts (4), la roue de guidage (6) se déplace progressivement vers le bas avec le palier linéaire (5) pour comprimer le ressort inférieur (40), de sorte que la position de contact entre la roue de guidage (6) et la voie (7) reste inchangée dans la direction verticale ; lorsque la pression entre le rail (7) et la roue de guidage (6) est réduite ou éliminée, la roue de guidage (6) est poussée par la force élastique du ressort inférieur (40) pour se déplacer vers le haut dans la direction verticale sur le rail (7) ; dans le processus de mouvement vers le haut, la roue de guidage (6) entre progressivement de nouveau en contact avec le rail (7) et génère une force de frottement ; et le cycle est répété ;
lorsque le dispositif de roue de guidage descend avec la carrosserie, la force de frottement entre la roue de guidage (6) et la voie (7) est supérieure aux forces élastiques des ressorts (4), la roue de guidage (6) se déplace progressivement vers le haut avec le palier linéaire (5) pour comprimer le ressort supérieur (41), la position de contact entre la roue de guidage (6) et la voie (7) reste inchangée dans la direction verticale ; lorsque la pression entre la voie (7) et la roue de guidage (6) est réduite ou éliminée, la roue de guidage (6) est poussée par la force élastique du ressort supérieur (41) pour se déplacer vers le bas dans la direction verticale sur la voie (7) ; dans le processus de mouvement vers le bas, la roue de guidage (6) entre progressivement de nouveau en contact avec la voie (7) et génère une force de frottement ; et le cycle se répète ;
lorsque la carrosserie de la voiture tremble pendant le processus de fonctionnement et entraîne une réduction de F(friction), si F(élastique)>G+F(friction), la roue de guidage se déplace jusqu'à l'état initial ;
lorsque la roue de guidage (6) quitte la voie (7), F(friction) est 0, et F(élastique)>G+F(friction), la roue de guidage (6) se déplace vers l'état initial.

2. Dispositif de roue de guidage comprenant une base (1), un palier d'orientation (2), un arbre de roue (3), des ressorts (4), un palier linéaire (5) et une roue de guidage (6), dans lequel le palier linéaire (5) est disposé dans la roue de guidage (6) et gainé sur l'arbre de roue (3), l'arbre de roue (3) et la base (1) sont reliés par le palier d'orientation (2), les ressorts (4) sont gainés sur l'arbre de roue (3) des deux côtés de la roue de guidage (6) et comprennent un ressort inférieur (40) et un ressort supérieur (41), les deux côtés de la roue de guidage (6) sont respectivement reliés à un côté du ressort supérieur (41) et à un côté du ressort inférieur (40), et la base (1) est disposée de manière fixe sur une carrosserie de voiture, **caractérisée en ce que** le ressort inférieur (40) est naturellement à l'état comprimé, et la force élastique F(élastique) du ressort inférieur (40) est égale à la gravité G de la roue de guidage (6), et le palier linéaire (5) est un palier linéaire d'orientation ; et **en ce que** le dispositif de roue de guidage est configuré pour mettre en oeuvre le procédé de la revendication 1.

3. Le dispositif de roue de guidage selon la revendication 2, dans lequel la longueur du ressort supérieur (41) est inférieure à celle du ressort inférieur (40).

4. Le dispositif de roue de guidage selon la revendication 2, dans lequel la roue de guidage (6) est configurée de telle sorte que : la roue de guidage (6) peut soit tourner sur un plan horizontal, soit se déplacer de haut en bas perpendiculairement au plan horizontal.
